# DEMANDE DE BREVET EUROPEEN

(11) **EP 1 147 848 A1**
(43) Date de publication de la demande: **24.10.2001**
(21) Numéro de dépôt: 00403578.8
(22) Date de dépôt: 18.12.2000
(51) Int. Cl.: B23K 26/067, B23K 26/12

(54) **Procédé et installation de coupage laser d'acier doux ou de construction avec optique multifocale**

(30) Priorité: 10.01.2000 FR 0000230
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Bertez, Christophe, 95450 Vaureal (FR); Hamy, Jean, 95370 Montigny les Cormeilles (FR); Matile, Olivier, 75018 Paris (FR)
(74) Mandataire: Pittis, Olivier

(57) **Abrégé**

Procédé et installation de coupage d'une pièce en acier de construction ou en acier doux, c'est-à-dire d'aciers alliés ou non-alliés, par mise en oeuvre d'un moyen optique transparent ou réfléchissant pour focaliser un faisceau laser et d'un gaz d'assistance dudit faisceau laser. Le moyen optique est de type multifocale et est choisi parmi les lentilles, les miroirs et leurs combinaisons. Le gaz d'assistance est de l'azote ou un mélange azote/oxygène. Le procédé de l'invention permet d'obtenir une oxydation faible ou quasi-nulle de la face de coupe et ce, en augmentant les performances de découpe d'environ 40% par comparaison avec un procédé de coupage laser utilisant de l'azote ou un mélange azote/oxygène.

## Description

La présente invention concerne un procédé et une installation de coupage des aciers de construction ou aciers doux par faisceau laser utilisant au moins une lentille ou au moins un miroir bifocales pour focaliser le faisceau laser en au moins deux points de focalisation distincts l'un de l'autre et situés sur un même axe, et de l'azote ou un mélange azote/oxygène en tant que gaz d'assistance du faisceau laser.

Les aciers de construction ou aciers doux englobent les aciers alliés ou non alliés, qu'ils soient ferritiques ou austénitiques, notamment les aciers dits faiblement alliés contenant moins d'environ 5% d'éléments d'alliage et ceux dits fortement alliés contenant plus de 5% d'éléments d'alliage.

Actuellement, la découpe des aciers, alliés ou non-alliés, par faisceau laser est couramment réalisée en mettant en oeuvre de l'oxygène en tant que gaz d'assistance, encore appelé gaz de coupe.

En effet, l'emploi d'oxygène permet, de par la réaction chimique du fer en présence d'oxygène, d'obtenir des vitesses de coupe élevées associées à des débits de gaz de coupe réduits, ce qui conduit à l'obtention de pièces découpées de faible coût.

Cependant, l'utilisation d'oxygène en tant que gaz d'assistance de faisceau laser pose un problème majeur, à savoir le problème d'oxydation des faces de coupe.

En effet, il est connu que, lors du coupage par faisceau laser des aciers alliés ou non-alliés, l'oxygène génère une pellicule d'oxydes sur la face de coupe qui empêche l'adhérence sur celle-ci d'éléments de protection, comme la peinture par exemple.

Afin d'obtenir une meilleure adhérence de tels éléments de protection, une opération subséquente de brossage est alors nécessaire pour supprimer cette couche d'oxydes.

Cependant, une telle opération de post-traitement de la ou des faces de coupe augmente considérablement le coût de la pièce et ce, d'autant plus que le contour de celle-ci sera complexe.

Dès lors, pour éviter ou minimiser ce problème d'oxydation et ce, bien que l'oxygène soit le gaz le plus adapté à la découpe par faisceau laser en termes de performances, il a déjà été proposé de découper les aciers en utilisant de l'azote ou un mélange azote/oxygène.

Le fait d'utiliser de l'azote ou un mélange azote/oxygène permet, en effet, de réduire la teneur en oxygène dans le gaz d'assistance et donc la présence d'oxydes sur les faces de coupe de la pièce ainsi découpée.

Cependant, avec de l'azote ou un mélange azote/oxygène, les vitesses de coupe sont considérablement limitées et les consommations de gaz sont augmentées par rapport à l'oxygène.

L'utilisation d'azote ou d'un mélange azote/oxygène en lieu et place d'oxygène n'est donc pas idéale car engendre une baisse des performances du procédé de coupage laser.

Dès lors, le but de la présente invention est d'améliorer les procédés de coupage par faisceau laser des aciers alliés ou non-alliés, c'est-à-dire de proposer un procédé de découpe au laser de pièce en acier conduisant à une oxydation faible, voire quasi-nulle, des faces de coupe en augmentant les performances de découpe d'environs 40% par comparaison avec un procédé de coupage laser utilisant de l'azote ou un mélange azote/oxygène.

La présente invention concerne alors un procédé de coupage d'une pièce en acier allié ou non-allié par mise en oeuvre d'au moins un moyen optique transparent ou réfléchissant pour focaliser au moins un faisceau laser et d'au moins un gaz d'assistance dudit faisceau laser, dans lequel le moyen optique est de type à multi-focales et le gaz d'assistance est de l'azote ou un mélange azote/oxygène contenant au moins 90% d'azote.

Dans le cas de la présente invention, par moyen optique de type multi-focales, on entend que le moyen optique, par exemple une lentille, permet de focaliser le faisceau laser en plusieurs points de focalisation distincts les uns des autres, le plus souvent un premier et un deuxième points de focalisation distincts, lesquels sont généralement situés sur un axe sensiblement co-axial à l'axe de la buse du dispositif laser, c'est-à-dire de la tête laser par laquelle sort le ou les faisceaux laser.

Selon le cas, le procédé de l'invention peut comprendre l'une ou plusieurs des caractéristiques suivantes :
- le moyen optique est choisi parmi les lentilles, les miroirs et leurs combinaisons, de préférence une lentille, par exemple une lentille bifocale, c'est-à-dire à deux points de focalisation distincts.
- le gaz d'assistance est de l'azote contenant moins de 150 ppm en vol. d'oxygène en tant qu'impuretés, de préférence moins de 100 ppm en vol.
- le gaz d'assistance est un mélange azote/oxygène contenant une teneur en oxygène supérieure à 0 % en vol. et inférieure à 8 % en vol., de préférence comprise entre 150 ppm en vol. et 5 % en vol.
- le moyen optique est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.
- l'épaisseur de la pièce à couper est comprise entre 1.5 mm et 5 mm, et on utilise alors, pour ces épaisseurs, une source laser de 1800 Watt de puissance par exemple.
- la pièce à couper est choisie parmi les plaques, les tôles et les tubes.
- le mélange azote/oxygène est obtenu directement sur site d'utilisation à partir d'air atmosphérique traité par un système à membrane.

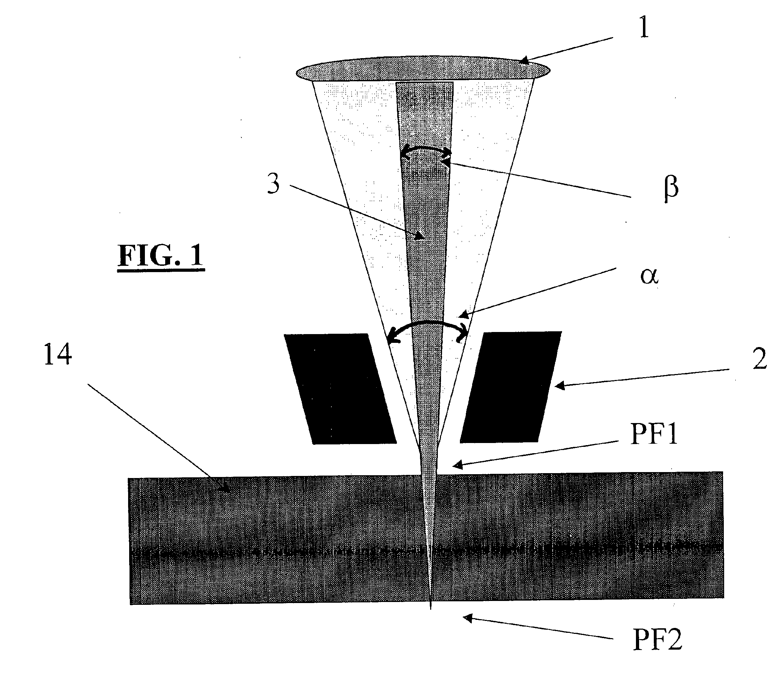

En d'autres termes, comme thématisé sur la figure 1, l'invention repose sur l'utilisation en combinaison, d'une part, d'une ou plusieurs optiques 1 transparentes ou réfléchissantes, tels des lentilles ou des miroirs, permettant d'obtenir plusieurs points de focalisation PF1, PF2 distincts du faisceau laser 3, approximativement dans le même axe et, d'autre part, d'azote ou d'un mélange azote/oxygène en tant que gaz d'assistance, c'est-à-dire de gaz de coupe.

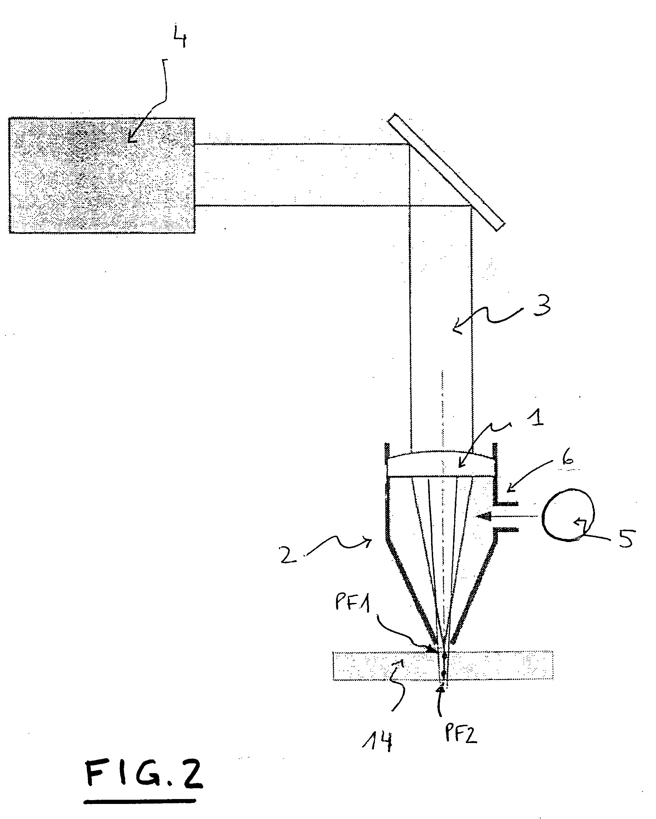

Une installation de coupage d'une pièce en acier, allié ou non-allié, conforme à l'invention est schématisée sur la figure 2.

Celle-ci comprend au moins un générateur laser 4 pour générer au moins un faisceau laser 3, au moins une buse 2 de sortie traversée par ledit faisceau laser 3, au moins un moyen optique 1 transparent ou réfléchissant pour focaliser ledit faisceau laser 3, et au moins une source 5 de gaz d'assistance dudit faisceau laser 3 alimentant ladite buse 2 de sortie en en gaz d'assistance, l'introduction du gaz d'assistance dans la buse 2 se faisant par un ou plusieurs orifices 6 d'entrée de gaz traversant par la paroi périphérique de la buse 2.

Selon l'invention, le moyen optique 1 est de type à multi-focales, de préférence une lentille multi-focale, et la source 5 de gaz d'assistance alimente la buse 2 en azote ou en un mélange azote/oxygène.

De préférence, le laser est de type CO₂, mais dans certains cas, il peut être de type YAG.

Des optiques 1 transparentes ou réfléchissantes à plusieurs points de focalisation utilisables dans le cadre de la présente invention sont décrites dans le document WO-A-98/14302 ou encore dans les documents DE-A-2713904, DE-A-4034745, JP-A-01048692 ou JP-A-56122690.

Comme détaillé sur la Figure 1, le premier point de focalisation PF1 issus de l'angle de convergence le plus grand, ici l'angle a, se positionne à proximité de la surface supérieure de la pièce 14 à découper, de préférence en coïncidence avec ladite surface supérieure ou dans l'épaisseur du matériau dans une région voisine de ladite surface supérieure.

Le deuxième point de focalisation PF2 issus de l'angle de convergence le plus petit, ici l'angle β, se positionne à proximité de la surface inférieure de la pièce 14 dans l'épaisseur du matériau ou en dehors de celle-ci.

Ce principe permet, par rapport à l'utilisation d'une optique standard employée à la découpe d'acier sous azote d'utiliser des diamètres de buse inférieurs et donc de diminuer les consommations en gaz.

En effet, l'utilisation d'une optique standard, c'est-à-dire ayant un seul point de focalisation, implique de positionner son seul point de focalisation, donc celui pour lequel l'angle de convergence est le plus grand, à la face inférieure du matériau, voire en dessous.

De ce fait, afin de laisser passer le faisceau laser, il convient d'utiliser des buses de fort diamètre, typiquement d'au moins 2 mm de diamètre, celui-ci étant d'autant plus important que l'épaisseur augmente, et donc augmente d'autant les consommations de gaz.

Au contraire, selon la présente invention, en associant une optique 1 bifocale, c'est-à-dire à au moins deux points de focalisation PF1 et PF2 distincts l'un de l'autre, à de l'azote ou un mélange azote/oxygène, d'une part, on diminue les consommations de gaz ainsi que susmentionné et, d'autre part, on supprimer ou on réduit nettement la présence d'oxyde sur les faces de coupe, en particulier dans le cas de la découpe des aciers de construction ou des aciers doux.

Dit autrement, le procédé de l'invention permet d'augmenter les performances de découpe et de limiter la consommation de gaz de coupe tout en obtenant un bilan économique favorable par rapport à l'oxygène en incluant le gain sur le parachèvement.

Lorsque l'on souhaite obtenir une coupe quasiment exempte d'oxyde, il convient d'employer de l'azote gazeux dont la teneur en oxygène n'excède pas 150 ppm en volume.

Toutefois, si la suppression totale ou quasi-totale des oxydes n'est pas impérative ou pas souhaitée, c'est-à-dire qu'une limitation de la présence de ces oxydes sur les faces de coupe suffit, un mélange d'azote et d'oxygène dont la teneur en oxygène est préférentiellement inférieure ou égale à 5 % en volume convient parfaitement.

Un mélange azote/oxygène utilisable dans le cadre de l'invention peut être obtenu, par exemple, directement sur site d'utilisation à partir d'air atmosphérique traité par un système à membrane de manière à diminuer sa teneur en oxygène jusqu'à une valeur souhaitée.

Un système à membrane de ce type est commercialisé par la Société L'AIR LIQUIDE sous la dénomination FLOXAL™.

Toutefois, le mélange azote/oxygène peut également être réalisé plus classiquement par mélange d'azote et d'oxygène en proportions souhaitées.

Le procédé de coupage laser de l'invention conduit à des vitesses de coupe élevées, c'est-à-dire de l'ordre de 0,9 m/min à environ 5,9 m/min en fonction des épaisseurs, associées à des débits de gaz de coupe réduits, typiquement pas plus de 19 m³/h, et à l'obtention de pièces découpées de faible coût, en particulier pour une source laser de 1800 W de puissance par exemple.

## Revendications

1. Procédé de coupage d'une pièce en acier allié ou non-allié par mise en oeuvre d'au moins un moyen optique transparent ou réfléchissant pour focaliser au moins un faisceau laser et d'au moins un gaz d'assistance dudit faisceau laser, dans lequel le moyen optique est de type multi-focales et le gaz d'assistance est de l'azote ou un mélange azote/oxygène contenant au moins 90% d'azote.

2. Procédé selon la revendication 1, caractérisé en ce que le moyen optique est choisi parmi les lentilles, les miroirs et leurs combinaisons, de préférence une lentille.

3. Procédé selon l'une des revendications 1 ou 2, caractérisé en ce que le moyen optique est une lentille bifocales.

4. Procédé selon l'une des revendications 1 à 3, caractérisé en ce que le gaz d'assistance est de l'azote contenant moins de 150 ppm en vol. d'oxygène en tant qu'impuretés, de préférence moins de 100 ppm en vol.

5. Procédé selon l'une des revendications 1 à 4, caractérisé en ce que le gaz d'assistance est un mélange azote/oxygène contenant une teneur en oxygène supérieure à 0 % en vol. et inférieure à 8 % en vol., de préférence comprise entre 150 ppm en vol. et 5 % en vol.

6. Procédé selon l'une des revendications 1 à 5, caractérisé en ce que le moyen optique est agencé de manière à obtenir au moins un premier point de focalisation se positionnant à proximité de la surface supérieure de la pièce à découper, de préférence en coïncidence avec ladite surface supérieure, ou dans l'épaisseur de la pièce à découper dans une région voisine de ladite surface supérieure et au moins un deuxième point de focalisation se positionnant à proximité de la surface inférieure de la pièce à couper et dans l'épaisseur de celle-ci ou en dehors de celle-ci.

7. Procédé selon l'une des revendications 1 à 6, caractérisé en ce que l'épaisseur de la pièce à couper est comprise entre 1.5 mm et 5 mm.

8. Procédé selon l'une des revendications 1 à 7, caractérisé en ce que la pièce à couper est choisie parmi les plaques, les tôles et les tubes.

9. Procédé selon l'une des revendications 1 à 8, caractérisé en ce que le mélange azote/oxygène est obtenu directement sur site d'utilisation à partir d'air atmosphérique traité par un système à membrane.

10. Installation de coupage d'une pièce en acier allié ou non-allié comprenant :
- au moins un générateur laser pour générer au moins un faisceau laser,
- au moins une buse de sortie traversée par ledit faisceau laser,
- au moins un moyen optique transparent ou réfléchissant pour focaliser ledit faisceau laser, et
- au moins une source de gaz d'assistance dudit faisceau laser alimentant ladite buse de sortie en en gaz d'assistance,
caractérisée en ce que :
- le moyen optique est de type multi-focale, et
- la source de gaz d'assistance alimente la buse en azote ou en un mélange azpte/oxygène contenant au moins 90% d'azote.
